# EUROPEAN PATENT APPLICATION

(11) **EP 1 566 758 A1**
(43) Date of publication of application: **24.08.2005**
(21) Application number: 05101089.0
(22) Date of filing: 14.02.2005
(51) Int. Cl.: G06F 17/60

(54) **Implementing data quality using rule bases and knowledge engineering**

(30) Priority: 18.02.2004 US 782183
(71) Applicant: AT&T Corp., New York, NY 10013-2412 (US)
(72) Inventor: Tamraparni, Dasu, New Providence, NJ 07974 (US); Vesonder, Gregory, T., Boonton Township, NJ 07005 (US); Wright, Jon, R., Morris Plains, NJ 07950 (US)
(74) Representative: Harding, Richard Patrick

(57) **Abstract**

Knowledge engineering methodology and tools are applied to the problems of data quality and the process of data auditing. Business rules and data conventions are represented as constraints on data which must be met. The data quality system and process of the present invention functions to allow good data to pass through a system of constraints unchecked. Bad data, on the other hand, violate constraints and are flagged. After correction, this data is then fed back through the system. Advantageously, constraints are added incrementally as a better understanding of the business rules is gained.

## Description

### BACKGROUND OF THE INVENTION

### Technical Field of the Invention

The present invention relates to knowledge engineering techniques and, in particular, to the application of such techniques to improve data quality.

### Description of Related Art

Existing data quality work involves four broad categories: (a) merging and purging of duplicates using database techniques and similarity measures; (b) name and address clean up; (c) database profiling using simple static summaries; and (d) ad hoc analytical techniques like outlier detection, missing value imputation, process control using sigma limits and others.

Traditionally, data quality programs have acted as a pre-processing stage to make data suitable for a data mining or analysis operation. Recently, data quality concepts have been applied to databases that support business operations (such as provisioning and billing). However, there are many practical complications. For example, documentation on business rules is often meager. Rules change frequently. Domain knowledge is often fragmented across experts, and those experts do not always agree. Typically, rules have to be gathered from subject matter experts iteratively, and are discovered out of logical or procedural sequence, and thus must be organized in order to be effectively used.

As a background to data quality implementation for business operations, it is important to understand the data quality continuum (or data handling process) which emphasizes the continuous nature of data quality monitoring. A high level view of this continuum is now presented. First, during "data gathering" errors typically include manual entry errors (9o8 instead of 908), short cuts (cannot store updates by minute, so store hourly aggregates) and improperly executed processes (counter resets itself, gauge cannot measure more than 1000 units) resulting in mangled data (missing data, censored and truncated data). Once gathered, the data has to be delivered to its destination ("data delivery"). Problems at this stage typically involve transmission (lost data) issues, so that the choice of a protocol that can incorporate checks for file sizes, headers and other control mechanisms is important. Next, "data storage" quality issues arise when the project is not planned properly and the resources are not sized to the problem. Inappropriate and incompatible hardware software platforms, poor database design and data modeling can all lead to mangled data. In addition, the data can become unusable if there is insufficient documentation to interpret and access the data. Next, "data integration" poses numerous problems. When the data are derived from multiple sources (for example, different companies with a common customer base merge), there is no common join key. Instead, soft keys like names and addresses have to be used. Arbitrary matching heuristics are employed as well. Such practices result in improper joins, where records that do not belong together get identified as related. Next, "data retrieval" also raises data quality issues such as incorrect queries that are not tested properly, improper synchronization of time stamps and misinterpretation of data due to incomplete metadata and domain knowledge. Finally, it is important to make sure that the data analysis or data mining technique chosen is appropriate for the data and the business problem, and not merely a convenience (familiar analysis, have the code handy).

The nature of the data itself (federated, streaming data, web server logs) and the type of attributes (numeric, descriptive, text, image, audio/video) determine the kind of techniques that are appropriate for dealing with data quality issues. A detailed discussion of the various aspects of data quality in the context of modem data paradigms can be found in T. Dasu, et al., "Exploratory Data Mining and Data Cleaning," John Wiley, New York, 2003.

A strong motivation for undertaking data audits is the fact that business operations are becoming increasingly complex and opaque. Databases and data warehouses that support them are equally intricate, designed originally to reflect the business rules that govern the operations. With the passage of time, modifications and additions are made to incorporate changing business needs but these system alterations are not documented. Serious data quality errors occur when the data no longer reflect the real-life processes and the databases cannot serve the purpose for which they were designed. For example, if the inventory databases are not accurate, sales and provisioning come to a standstill because of the high cost of potential mistakes. The sales personnel are either selling things that do not exist, or turning away customers under the mistaken impression that the product is not available. In both the scenarios, the corporation would end up losing valuable business to the competition. Similarly, inaccurate billing systems have severe consequences for corporations. An important goal of data auditing is to reduce cycle times in operations and maximize automation to avoid human intervention.

Data quality errors associated with the discord between business operations and their database counterparts occur in two significant ways. First, during the design of the data processes if the business rules that govern the operations are not interpreted properly. For example, a company might produce machines, some of which are meant for external sales and some for internal use. Business rules determine the type of machine, for example, "if the machine has a red handle, use it for internal purposes; or if the machine has a green handle, sell it to outsiders." A misrepresentation of this rule while creating an inventory database for sales can lead to serious problems. Second, when the business rules change, the data processes fail to keep up with the changes.

The business operations databases of a company affect its performance in many ways, for example, in its ability to: offer new, competitive services; provide reliable products and services; keep provisioning and billing processes working smoothly; and, in general, stay competitive and profitable. It is not uncommon for operations databases to have 60% to 90% bad data. As a consequence, much energy has been focused on maintaining the integrity of operations databases through data audits. It is necessary to possess a successful data quality process so that cycle times are reduced by preventing errors by applying the knowledge to earlier stages of data capture. A major source of data quality issues in this context is the lack of accurate and complete documentation of the rules of business operations (business rules) and the conventions used in representing and storing the data. Gathering and representing business rules and subject matter expertise that drive the business operations and documenting the data conventions by which the rules are implemented in the associated data processes is probably the most critical as well as the most challenging part of a data quality program for business operations.

However, aggressive project schedules take a toll on comprehensive documentation, which is often given a low priority. As people change jobs, the data-related and process-related expertise that resides with these people is lost, rendering the data opaque and unusable. While data exploration and data browsing reveal some characteristics of the data (missing values, attribute distributions and interactions, violations of declared schema specifications), domain specific rules can only be learned from subject matter experts. Unusual schema specifications and application-driven business rules cannot be inferred from the data. Without these, the data will have hidden pitfalls (data glitches) caused by incomplete data interpretation (misinterpretation) leading to misleading and incorrect results and decisions. The tasks of gathering and representing highly domain specific knowledge from subject matter experts, whether related to business operations or data processes, is significantly challenging because:
- the knowledge is available in a fragmentary way, often out of logical or operational sequence;
- the expertise is split across organizations, with little incentive for people to cooperate;
- the business rules change frequently;
- there is no consistency, i.e., the experts do not agree on the business rules; and
- frequent project and personnel transitions occur with no accountability.

A need accordingly exists for a data quality program which can ensure both the usability and reliability of data in the context of the constraints (business rules, conventions for data processing) that define the data processes supporting business operations.

Data quality is a complex and difficult concept to define, measure and implement. It is closely tied to the problem domain, the data itself and the end use to which the data will be put. Some applications and users have a high tolerance to certain types of data quality issues, while others prize other qualities. The following brief list of references to data quality literature is provided as background information in this area, and the material in the references is incorporated by reference.

A comprehensive listing of references relating to data quality can be found in T. Dasu, et al., "Exploratory Data Mining and Data Cleaning," John Wiley, New York, 2003.

There has also been considerable work in data quality in the management sciences and process management areas as evidenced by: K. T. Huang, et al., "Quality Information and Knowledge Management," Prentice Hall, New Jersey, 1999; R. L. Wang, "Journey to Data Quality," volume 23 of Advances in Database Systems, Kluwer, Boston, 2002; L. English, "Improving Data Warehouse and Business Information Quality: Methods for Reducing Costs and Increasing Profits," Wiley, New York, 1999 and D. Loshin, "Enterprise Knowledge Management: The. Data Quality Approach," Morgan Kaufmann, San Francisco, 2001.

A hands-on approach to data quality processes can be found in T. Redman, "Data Quality: Management and Technology," Bantam Books, New York, 1992 and T. Redman, "Data Quality: The Field Guide," Digital Press (Elsevier), 2001.

Preparing data for data mining is discussed in D. Pyle, "Data Preparation for Data Mining," Morgan Kaufmann, San Francisco, 1999.

A rigorous approach to data mining that includes a brief database focused approach to data quality can be found in J. Han, et al., "Data Mining: Concepts and Techniques," Morgan Kaufmann, San Francisco, 2000.

Specific treatments for data cleaning can be found in M. Hernandez, et al., "Real-World Data is Dirty: Data Cleansing and the Merge/Purge Problem," Data Mining and Knowledge Discovery, 2(1):9-37,1998 (merge-purge problem, duplicate elimination) and T. Dasu, et al., "Mining Database Structure; or, How to Build a Data Quality Browser," In Proc. ACM SIGMOD Conf., 2002.

Statistics based approaches include: missing value treatment (R. J. A. Little, et al., "Statistical Analysis with Missing Data," Wiley, New York, 1987); exploratory analysis (Tukey, "Exploratory Data Analysis," Addison-Wesley, Reading, 1977); statistical quality control (A. J. Duncan, "Quality Control and Industrial Statistics," Irwin, Homewood, 1974) and treatment of contaminated data (R. K. Pearson, "Data Mining in the Face of Contaminated and Incomplete Records," In SIAM Intl. Conf. Data Mining, 2002).

Outlier detection plays an important role in data quality. References in this area include: E. Knorr, et al., "Algorithms for Mining Distance-Based Outliers in Large Datasets," In Proc. Intl. Conf Very Large Data Bases, pages 392-403, 1998; and M. M. Breunig, et al., "LOF: Identifying Density-Based Local Outliers," In Proc. ACM SIGMOD Conf , pages 93-104, 2000.

Tools and technologies are discussed in P. Vassiliadis, et al., "Arktos: A Tool for Data Cleaning and Transformation in Data Warehouse Environments," Data Engineering Bulletin, 23(4):42-47, 2000, H. Galhardas, et al., "Declarative Data Cleaning: Language, Model and Algorithms," In Intl. Conf. Very Large Databases, pages 371-380, 2001, T. Dasu, et al., "Mining Database Structure; or, How to Build a Data Quality Browser," In Proc. ACM SIGMOD Conf., 2002 and V. Raman, et al., "Potters Wheel: An Interactive Data Cleaning System," In Intl. Conf. Very Large Databases, pages 381-390, 2001.

### SUMMARY OF THE INVENTION

It has been noted that similarities exist between the activities required to implement successful data quality projects and the activities involved in implementing knowledge based systems. An embodiment of the present invention applies knowledge engineering methodology and tools to the problems of data quality and the process of data auditing.

Business rules and data conventions are represented as constraints on data which must be met. Constraints are implemented in a classical expert system formalism referred to in the art as production rules. Some constraints are static and are applied to the data as it is, and thus are schema related and entail validating the data specifications against the instantiation of the data. Other constraints are dynamic in that they relate to data flows as they pass through a process built to record and monitor the associated business operations, and thus comprise business rules that shape the processes. These rules affect the way the data flows to various databases and how resources are allocated and provisioned. The data quality system and process of the present invention functions to allow good data to pass through a system of constraints unchecked. Bad data, on the other hand, violate constraints and are flagged. After correction, this data is then fed back through the system. Advantageously, constraints are added incrementally as a better understanding of the business rules is gained.

The present invention provides a powerful technique to accurately represent, update and maintain the constraints (business rules, conventions for data processing) that define the data processes supporting the business operations, thus ensuring the usability and reliability of the data, two major components of data quality metrics. The process is scalable in that the tools remain viable and perform well even as the size of the data sets to be audited increases.

The knowledge engineering and rule-based approach of the present invention is far more suitable for implementing and monitoring data quality than a conventional requirements approach supported by a procedural language because of the following factors: the IF-THEN semantics of the static and dynamic constraints utilized by the system provide for better analysis and results; the system is readily adaptable to frequently changing requirements as the underlying operational processes change or are better understood; and, the system is better able to evaluate the large number of possible scenarios that need to be considered and other characteristics of data quality control.

The present invention provides a framework for the systematic auditing of data, particularly complex streams of process related data that support business operations, through the use of knowledge representation and knowledge engineering techniques and rule based programming. It differs in that prior art techniques mostly apply to static, often database resident data. Furthermore, a rule trace capability serves to create metrics for quantifying data quality (for example, to measure the health of the data at various points in the process) as well as for isolating the problem data sections and rules.

### BRIEF DESCRIPTION OF THE DRAWINGS

A more complete understanding of the method and apparatus of the present invention is provided by the following Detailed Description given, by way of example, with reference to the accompanying Drawings wherein:
FIGURE 1 shows a rule base; and
FIGURE 2 shows a schematic representation of a data quality audit tool in accordance with an embodiment of the present invention.

### DETAILED DESCRIPTION OF THE DRAWINGS

It is imperative that data should be validated by putting it through a data quality implementation process. This ensures a level of quality in the data which can be reflected in applicable and measurable data metrics. Only after the data have been validated to the required degree of quality should that data be made available for use for various business and analytical purposes.

Data quality issues arise in a number of circumstances, and thus a number of tools can be employed to correct problems. Data gathering and data delivery glitches are primarily corrected through process management techniques such as implementation of checks and bounds, and end-to-end continuous data audits. Data quality during data loading, storage and retrieval can be managed through ETL tools, metadata management and other database techniques. The latter can also help with duplicate elimination (see, M. Hernandez, et al., "Real-World Data is Dirty: Data Cleansing and the Merge/Purge Problem," Data Mining and Knowledge Discovery, 2(1):9-37, 1998). Data exploration based on techniques such as Exploratory Data Analysis (J. Tukey, "Exploratory Data Analysis," Addison-Wesley, Reading, 1977), missing value imputation (R. J. A. Little, et al., "Statistical Analysis with Missing Data," Wiley, New York, 1987) and outlier detection (E. Knorr, et al, "Algorithms for Mining Distance-Based Outliers in Large Datasets," In Proc. Int1. Conf Very Large Data Bases, pages 392-403, 1998; and M. M. Breunig, et al., "LOF: Identifying Density-Based Local Outliers," In Proc. ACM SIGMOD Conf , pages 93-104, 2000) can be used to detect and repair damaged data. Alternately, the data to be validated can be compared to a gold standard using set comparison methods (T. Johnson, et al., "Comparing Massive High-Dimensional Data Sets," In Knowledge Discovery and Data Mining, pages 229-233, 1998).

The solutions offered above are general and work on different aspects of the data quality issues. However, the hardest part of a data quality implementation program for business operations is capturing a complete and accurate set of business rules that are specific to the business problem. Such expertise is often fragmented across many individuals and seldom documented in writing. Gathering these rules requires extensive interaction with subject matter experts. Furthermore, the gathering of the rules presents an iterative process requiring numerous experts to arrive at a consensus. As a consequence, the rules have to be put together in a piecemeal fashion, and are often out of sequence. As more information is gathered, the rules need to be updated, added or deleted. This significantly complicates the task of coalescing and refming the rules in a manageable fashion.

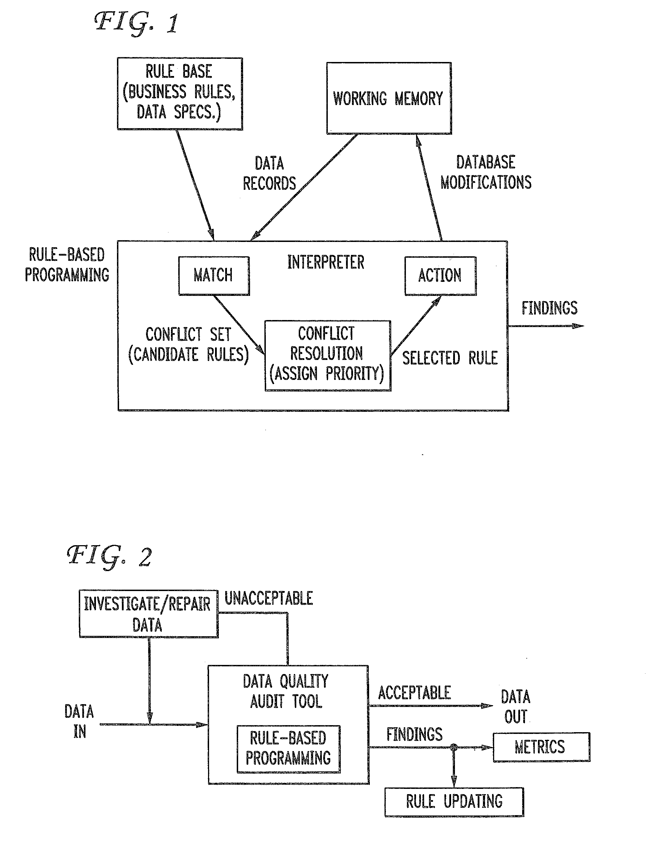

In accordance with an embodiment of the present invention, however, once the defined business rules have reached a critical mass for implementation, a data quality audit tool using rule-based programming can be built. This tool is schematically represented in FIGURE 2. Data is passed through the data quality audit tool wherein the applicable rule-based programming operates on the data. The findings from the data audit pass are used to update the data quality metrics and verify and refine the rules. Unacceptable data detected in the pass is sent for further investigation and repair. The repaired data is then recycled back through the data quality audit tool for another pass. Good data simply passes through the tool. The key to configuration and operation of the tool is the specification of the rule-based programming which defines the business rules, and the present invention advantageously utilizes knowledge engineering techniques for this specification.

It is recognized that data quality problems and their solutions tend to be domain specific. In fact, whether data quality is "good" or "bad" is determined largely by how the data are used within the context of a business application. It is accordingly critical that one possess a clear and comprehensive understanding the application domain in order to design an effective data quality audit tool. The tool implementer generally does not possess this knowledge. This makes the role of the domain expert, who often has limited knowledge of the tool technology, central to the success of a data quality project. The value of the expert lies in often hard-won and specialized knowledge about an application.

Domain experts, however, sometimes struggle to fmd a way of talking about the problem that is meaningful to all concerned. The implementer(s) and domain expert(s) therefore require a common language within which data quality requirements and implementations can be discussed and debated. The notion of constraints provides a useful way of discussing data quality among both experts and implementers.

Constraint logic programming is well known in the art (for example, see K. Marriot, et al., "Constraint Logic Programming," MIT Press, Boston, 1998). Constraint logic programming has typically been applied to highly constrained problems such as job shop scheduling (P. Baptiste, et al., "Constraint-Based Scheduling," Kluwer Academic, London, 2001). Solutions to such problems often require extensive search within the problem space. Researchers have focused on search algorithms, and on developing a sound logical theory to support constructs in their constraint languages.

The present invention advantageously utilizes the concept of constraint logic programming to solve the problem of defining the business rules analysis performed by the data quality audit tool. Constraints are implemented in a classical expert system formalism referred to in the art as production rules. Some constraints are static and are applied to the data as it is, and thus are schema related and entail validating the data specifications against the instantiation of the data. Other constraints are dynamic in that they relate to data flows as they pass through a process built to record and monitor the associated business operations, and thus comprise business rules that shape the processes.

Data quality projects typically focus on "finding the rules." One does not really know what the constraints are in the beginning because understanding of the application domain is limited. Once the rules are formulated, finding a "solution" seldom requires sophisticated and extensive search because data quality problems tend to be less constrained. In a sense, constraints within the context of a data quality project represent boundary conditions and are used to identify exceptions. The exceptions then become a source of feedback in the data flow for error correction. While it is not necessary that all the practical problems associated with data quality fit within the notion of constraining relationships within data, a majority of data quality tasks, particularly those associated with gathering subject matter expertise, typically do fit well.

Constraints in a data quality project are dynamic and must be flexible because constraints apply at different stages of the data flow, and some are more important than others. Still further, it is noted that success in a practical sense for data quality evaluations sometimes requires constraints to be relaxed, or perhaps even ignored, in some cases but not in others. The use of rule-based programming in accordance with the present invention offers a convenient way of incorporating this flexibility by permitting the user to assign weights and priorities to control the firing of the rules. The topic of weight assignments in rule-based programming is well understood by those skilled in the art and will not be discussed further.

Rule-based programming consists of transforming requirements into discrete units called rules that have the form "IF this is the situation, THEN do this action." These units are independent which makes it easy to add, delete or change them without affecting the entire system. A rule base has three parts as shown in FIGURE 1:
- a working memory which functions similarly to a database and contains information representing the current state of the system;
- a rule memory which comprises a set of rules each of the form "IF this is the situation in the working memory, THEN do these actions" (where some of the actions usually entail making a change to the working memory); and
- an interpreter which serves as an inference mechanism to match the working memory to the situations represented in the rule memory, select the rule(s) to be executed and then perform the prescribed actions.

Data in to be audited is applied by the audit tool to the rule based programming. This data in may comprise data records extracted from the working memory or a received data flow. A match functionality within the interpreter compares the data in against the set of rules (business rules or data specifications, for example) maintained by the rule base. A failure to match indicates that the data is acceptable, and it simply passes successfully through the audit process. There may exist one or more matches as evidenced by a conflict set of matched candidate rules. This conflict set is processed by a conflict resolution functionality in the interpreter which assigns priority among and between the rules which are matched. One or more of the matched rules is selected based on the conflict resolution operation and passed on to an action functionality which specifies certain modifications to be made to the working memory (for example, to investigate or repair the stored data) or modifications to be made to the received data flow. The findings of the interpreter with respect to both matches and non-matches may be output and processed as described above for metric evaluation and for rule base modifications to improve the auditing process.

The interaction of these components provides interesting properties that can be exploited by the system builder. An important property is separation of control from the program. Control is provided by the information in the working memory and the operation of the interpreter, not by the ordering and placement of the rules. This separation of control from the program provides independence of each of the rules making it easier to change aspects of the programming without disastrous consequences to the system.

Developing a rule-based system consists of encoding the knowledge from the system requirements into rules of the type "IF X, THEN do Y." The working memory for such an application would consist of a record or working memory element that would represent data concerning X and perhaps, also, Y. The inference mechanism would determine (match X) whether any of the working memory elements satisfies a given rule situation and, if so, selects the one or more rules to execute (for example, by performing the specified action Y, and if necessary updating X and/or Y in the working memory). The present invention advantageously uses this methodology for data quality evaluation purposes.

There are several public domain and commercial rule-based systems available for use. Many are based on the OPS work of Charles Forgy (see, C. L. Forgy, "Ops5 User's Manual," 1981, Technical Report CMI-CS-81-135) at Carnegie-Mellon University. CLIPS is a rule based system built by NASA and available to the public (see, J. C. Giarratano, "Expert Systems: Principals and Programming," Brooks Cole Publishing Co., 1998; and NASA "CLIPS," http://siliconvalleynone.com/clips.html, NASA Johnson Space Center). JESS, from the US Department of Energy, is derived from CLIPS and written in JAVA (E. J. Friedman-Hill, "JESS," http://herzberg.ca.sandia.gov/jess, 1997, Sandia National Laboratories). Commercial version of OPS and CLIPS can be found at http://www.pst.com. A preferred implementation of the present invention uses a variant of OPS (see, J. R. Rowland, et al., "The C5 User Manual" release 1.0, 1987).

Data quality benefits from using the rule-based methodology because a commonality exists between the activities associated with engineering a knowledge based system and a data quality process. What is important in addressing data quality issues is that domain experts be consulted and their knowledge incorporated into the defined rules. This is particularly true of data processes that support business operations where a particular set of business functions needs to be faithfully replicated in the data. Each of these functions can result in data which is stored in a database or cluster of databases (all potentially housed in a data warehouse) and is defined by its own set of experts, conventions and specifications for data gathering, data representation, data reduction and data modification. Further, experience suggests that multiple iterations are required to incorporate faithfully all of the knowledge of subject matter experts. Experts are rarely able to express themselves fully on a single pass, and often need feedback from a partially working system to bring out important aspects of their knowledge.

Attempts at discovering rules that govern business operations without consulting experts have been largely unsuccessful. Business rules typically cannot be inferred simply by examining structure and relationships in the data that evolve over long time periods and cross organizational boundaries. In fact, they frequently reflect human practices and policies related to the business and social context of the data (for example, taking into account cost-benefit analysis). A good example is the role of expense and revenue calculation in business decisions.

Furthermore, inference from data is a very hard problem, and one that is not likely to be solved in the near term. It is not likely that one will be able to infer the business rules associated with an obscure piece of machine equipment without the help of engineers that specialize in the design and use of such equipment.

While tools for recording and managing data generated by the processes might be abundant (schema specifications and constraint satisfaction features in DBMS, XML tools), no tools exist that are designed for capturing knowledge from experts to support business operations and validating the data processes against the knowledge.

Rule-based programming, however, is an ideal technology that supports this task well. Informal IF-THEN rules are easily understood by domain experts, and provide the basis for communication between the implementer and the expert. This is important not only for the expert to communicate to the implementer, but also in making relevant details of the implementation accessible to experts, who can then validate or modify it easily.

Furthermore, control is data driven and therefore control does not need to be expressed in source-code. This permits business rules to be expressed and changed independently from other units of knowledge. This expressiveness makes it easier to initially encode the knowledge in the software, easier to verify, and easier to validate and debug.

As things stand today, business operations databases are immensely daunting, primarily due to the economics driven desire to scale and to automate. Taskforces to implement data quality programs spend a majority of their time (80% to 90%) on just gathering information to understand the business and data processes. When the existing process is not understood, making changes is even more difficult. Testing minor changes takes an inordinate amount of time and resources. Faced with tight deadlines, any testing is often cursory, resulting in catastrophic data quality errors down the road. This is why rule based programming is still a powerful tool for expert systems and further why it is an especially powerful tool and solution in the context of the present invention for data quality processes.

The knowledge engineering process comprises four steps. The initial step is for the knowledge engineer to become familiar with the domain by understanding the architecture and operation of the inventory system and the current schema. The second step is that the knowledge engineer, armed with this rudimentary knowledge, participates in sessions with the experts to obtain a deeper understanding of the operations and the issues. It is ideal to have one, or at most, three experts for this stage. The third step begins once a sufficient and consistent body of knowledge is obtained. The technical team uses the knowledge to build a system and runs the system on the data. The knowledge engineer in the fourth step brings the results to the experts and the experts and the knowledge engineer critique the results, modify the knowledge base and then return to the third step, altering the code so that the system reflects the new, improved knowledge. This process occurs until a satisfactory conclusion is reached.

Capturing business rules, unconventional schema specifications and subject matter expertise, is at the heart of any data quality program designed to implement data audits for systems that support business operations. The combination of knowledge engineering and rule-based techniques provides a very effective mechanism for uncovering and applying knowledge intensive scrubs to data that may have multiple flaws that are represented in single records.

The trend in enterprises is to capture more data from more diverse and less controlled sources (sales personnel in the field rather than a data entry clerk). As this data accrues there will be quality problems and the resolution of such problems will be knowledge intensive and will involve multiple records and multiple tables. Furthermore, as the data repositories become increasingly large, heterogeneous and complex, the need to use empirical and data driven methods to understand the processes and audit them for data quality "at scale" (i.e., sustaining speed and performance even as the data systems balloon in size) will increase. The data quality engineer of the present and future will need techniques to capture, vet and deploy this knowledge in such a dynamic environment. The knowledge engineering methods and rule based techniques for data quality described herein provide an improved mechanism for auditing this data.

A final topic of importance to the data quality process (for example, as applied to business operations) is to quantify the quality of the data and ensure that the data audit has a positive effect on the data processes and the business operations they support. Conventional data quality metrics require that the data satisfy rigid but static constraints such as accuracy, completeness, uniqueness, consistency and timeliness. However, given that the types of data are evolving constantly, as well as the expectations about what the data can yield, the system of the present invention needs more dynamic and flexible ways of measuring data quality. Furthermore, the metrics are usually highly dependent on the application and the end-user of the data. For example, synchronizing time series meaningfully might be an important metric for an application that correlates network usage and network performance. Accuracy of every data point is critical for an application to allow customers access to monitor and change their own portfolio. On the other hand, an application that predicts general trends like averages and median values might need only a sample of good data and might emphasize other metrics, such as interpretability of the data.

In addition to the conventional metrics mentioned above, additional metrics should be considered which address the following:
- usability of the data: the data was disqualified for various reasons such as failure to meet static and dynamic constraints; or the data did not contain information to answer the business problem;
- accessibility: the duration and level of escalation required to get access to the required data. In practice, there are technological (bad interface to data, complicated query language, outdated and incompatible hardware/software), sociological (turf wars) and other reasons that make access to data difficult;
- interpretability: the schema related constraints as well as the business rules have to be specified clearly to interpret the data correctly. Some specifications are critical and affect the entire analysis while others affect only a small portion of the data under certain circumstances;
- increase in automation: data quality projects that are focused on cleaning up business operations databases and work flow related issue will benefit greatly from increased automation. Manual workarounds and interjections increase cycle times and introduce human errors; and
- reduction of duplication: duplication is caused by parallel or multiple entry of the same data with variation in representation (for example, Greg in one record and Gregg in another record). Much time is spent on trying to reconcile data from multiple sources.

The foregoing list of metrics illustrates the nuances in measuring data quality. Furthermore, this list of metrics serves as an initial taxonomy of knowledge that can be used to classify data quality rules. This taxonomy will be instrumental in comparing knowledge engineering efforts across systems and domains. Ultimately, data quality metrics should be directionally correct (i.e., as the metrics improve, the users of the data should find the data more useful and have greater faith in the results derived from the data).

Although preferred embodiments of the method and apparatus of the present invention have been illustrated in the accompanying Drawings and described in the foregoing Detailed Description, it will be understood that the invention is not limited to the embodiments disclosed, but is capable of numerous rearrangements, modifications and substitutions without departing from the spirit of the invention as set forth and defined by the following claims.

## Claims

1. A data quality auditing tool, comprising:
a rule-based programming data analyzer that compares received data to be audited against a set of rule-based criteria and identifies as unacceptable data that data which violate the rule-based criteria.

2. The tool as in claim 1, wherein the rule-based criteria are business rules and data conventions.

3. The tool as in claim 1, wherein the rule-based criteria are data rules represented as constraints on data which must be met.

4. The tool as in claim 3, wherein the constraints represent business rules and data conventions.

5. The tool as in claim 3 or 4, wherein the constraints comprise expert system production rules.

6. The tool as in claim 3, 4 or 5, wherein the constraints are static and are applied through the comparison against the data as is.

7. The tool as in claim 3, 4, 5 or 6, wherein the constraints are dynamic and are applied through the comparison against data flows.

8. The tool as in any preceding claim, wherein the analyzer comprises a match functionality that compares received data records representing the data to be audited against the set of rule-based criteria to generate a conflict set of one or more candidate rules which are met.

9. The tool as in any preceding claim, wherein the analyzer further comprises a conflict resolution functionality that assigns priority among and between the one or more candidate rules which are met and selects one or more rules for execution.

10. The tool as in any preceding claim, wherein the analyzer further comprises an action functionality that implements actions to be taken on the data as specified by the one or more rules selected for execution.

11. A method for data auditing, comprising:
comparing received data to be audited against a set of rule-based criteria; and
identifying as unacceptable data that data which violate the rule-based criteria.

12. The method as in claim 11, wherein the rule-based criteria are business rules and data conventions.

13. The method as in claim 11, wherein the rule-based criteria are data rules represented as constraints on data which must be met.

14. The method as in claim 13, wherein the constraints represent business rules and data conventions.

15. The method as in claim 13 or 14, wherein the constraints comprise expert system production rules.

16. The method as in claim 13, 14 or 15, wherein the constraints are static and are applied through the comparison against the data as is.

17. The method as in claim 13, 14, 15 or 16, wherein the constraints are dynamic and are applied through the comparison against data flows.

18. The method as in any one of claims 11 to 17, wherein comparing comprises matching received data records representing the data to be audited against the set of rule-based criteria to generate a conflict set of one or more candidate rules which are met.

19. The method as in any one of claims 11 to 18, further comprises resolving conflicts by assigning priority among and between the one or more candidate rules which are met and selecting one or more rules for execution.

20. The method as in any one of claims 11 to 19, further comprising implementing actions to be taken on the data as specified by the one or more rules selected for execution.
